# EUROPÄISCHE PATENTSCHRIFT

(11) **EP 3 595 946 B1**
(45) Veröffentlichungstag und Bekanntmachung des Hinweises auf die Patenterteilung: **16.07.2025**
(21) Anmeldenummer: 18728033.4
(22) Anmeldetag: 12.03.2018
(51) Int. Cl.: B60T 7/22

(54) **AMOK-BREMSSYSTEM**
VEHICLE-RAMPAGE BRAKING SYSTEM
SYSTÈME DE FREINAGE AMOK

(30) Priorität: 14.03.2017 DE 102017105441
(43) Veröffentlichungstag der Anmeldung: 22.01.2020
(73) Patentinhaber: Lohr, Marcus, 67259 Grossniedesheim (DE)
(72) Erfinder: Lohr, Marcus, 67259 Grossniedesheim (DE)
(74) Vertreter: Busch, Tobias
(86) Internationale Anmeldenummer: PCT/EP2018/055995
(87) Internationale Veröffentlichungsnummer: WO 2018/166931

(56) Entgegenhaltungen:
- WO-A1-01/37239
- WO-A1-2006/106009
- WO-A2-2005/056346
- DE-A1- 102014 100 929
- DE-T5- 112014 004 046
- DE-T5- 112014 006 344

## Beschreibung

Die Erfindung betrifft ein Fahrzeug mit einem System und ein Verfahren zur Gefahrenabwehr einer Amokfahrt eines Fahrzeugs, wobei das System mindestens eine Einrichtung zum Stillsetzen des Fahrzeuges durch Fremdeinwirkung von außen aufweist.

Es treten immer häufiger Anschläge auf, bei denen Attentäter mit einem Fahrzeug in eine Menschenmenge fahren. Bei dem Anschlag von Nizza am 14. Juli 2016 fuhr ein Attentäter mit einem Lkw durch eine Menschenmenge. Mindestens 86 Personen wurden getötet und mehr als 400 zum Teil schwer verletzt. Bei einem Anschlag auf den Berliner Weihnachtsmarkt am 19. Dezember 2016 steuerte ein Attentäter einen Lkw in eine Menschenmenge auf dem Weihnachtsmarkt an der Kaiser-Wilhelm-Gedächtniskirche. Durch die Kollision mit dem Lkw starben 11 Menschen und weitere 55 wurden verletzt, einige davon lebensgefährlich.

Zahlreiche Menschenleben hätten gerettet werden können, wenn die Fahrzeuge bei diesen Anschlägen vorzeitig stillgesetzt worden wären. Bei einer Amokfahrt bleibt Sicherheitskräften zur Gefahrenabwehr häufig nur ein finaler Rettungsschuss auf den Amokfahrer. Dieser ist nur schwer zu platzieren. Zumal die Tötung des Amokfahrers eine spätere Vernehmung zur Aufklärung der Tathintergründe unmöglich macht. Zudem befindet sich selbst einem finalen Rettungsschuss das Fahrzeug noch in Fahrt und kann weitere Menschen töten.

In der WO 2008/090205 A1 wird ein gepanzertes Fahrzeug, beispielsweise ein Kettenlöschfahrzeug, beschrieben, das über ein System zur Gefahrenabwehr einer Amokfahrt verfügt. An der Außenseite des Fahrzeugs ist ein mechanisch betätigbares Auslöseglied angeordnet. Bei dem Auslöseglied kann es sich beispielsweise um einen elektrischen Leiter handeln, der von einer Glaskuppel umschlossen ist. Zum Betätigen des Auslösegliedes wird die Glaskuppel zerstört, um den elektrischen Leiter durchbrennen zu lassen mit der Folge, dass vom Motor steuergeräteseitig eine Unterbrechung des Stromflusses durch den elektrischen Leiter erkannt wird und das Fahrzeug unverzüglich stillgesetzt wird.

Solche mechanisch bestätigbaren Auslöseglieder sind bei einer Amokfahrt mit einem Lkw oder einem Pkw nur sehr schwer zu erreichen aufgrund der verhältnismäßig hohen Geschwindigkeiten im Vergleich zu einem gepanzerten Kettenlöschfahrzeug.

Aufgabe der Erfindung ist es, ein Fahrzeug mit einem System zur Gefahrenabwehr einer Amokfahrt mit einem Fahrzeug bereitzustellen mit dem das Fahrzeug im Notfall zuverlässig gestoppt werden kann. Das System soll insbesondere durch Sicherheitskräfte von außen leicht zu aktivieren sein, sodass bei einer Amokfahrt möglichst wenig Menschen zu Schaden kommen. Zudem soll das System zuverlässig eine Amokfahrt von anderen Situationen unterscheiden können. Das System soll mit einem möglichst geringen Aufwand in marktübliche Pkws und Lkws integrierbar sein. Zudem soll das System zuverlässig gegen Manipulationen geschützt sein.

Diese Aufgabe wird erfindungsgemäß durch ein Fahrzeug mit einem System mit den Merkmalen des Anspruchs 1 gelöst und einem Verfahren mit den Merkmalen des Anspruchs 6. Bevorzugte Varianten sind den Unteransprüchen, der Beschreibung und den Zeichnungen zu entnehmen.

Erfindungsgemäß umfasst das System eine Sensoranordnung, wobei die Sensoranordnung als flächiges Gebilde ausgebildet ist, wobei das flächige Gebilde in einer Beleuchtungsanordnung des Fahrzeugs, insbesondere in einer Scheinwerferanordnung integriert ist und/oder das flächige Gebilde in einem Karosserieteil integriert ist, wobei das flächige Gebilde mindestens eine Fläche von 2 dm² aufweist, wobei die Sensoranordnung engmaschige elektrische und/oder optische Leiterbahnen aufweist und bei einem Durchschlagen der Bahnen durch ein Geschoss in der Art einer Kugel aus einer Pistole, die Sensoranordnung ein Signal auslöst und/oder ein Signal unterbricht, um das Fahrzeug zum Stillstand zu bringen, wobei die Sensoranordnung mit einer Fahrerassistenzeinheit zusammenwirkt, wobei die Fahrerassistenzeinheit zum Stillsetzen des Fahrzeugs auf ein Bremssystem und/oder ein Antriebssystem des Fahrzeugs wirkt.

Im Gegensatz zu herkömmlichen Systemen nach dem Stand der Technik mit mechanisch betätigbaren Auslösegliedern ermöglicht die Sensoranordnung ein zuverlässiges Stilllegen des Fahrzeugs im Falle einer Amokfahrt. Sicherheitskräfte oder Privatpersonen können im Notfall über die Sensoranordnung ein Signal auslösen, welches auf eine Einrichtung des Fahrzeugs wirkt, um dieses zum Stillstand zu bringen. Der Amokfahrer muss nicht zwangsläufig getötet werden und ist demzufolge noch zur Aufklärung der Tat vernehmbar.

Erfindungsgemäß erfolgt die Stillsetzung dadurch, dass die Sensoranordnung mit einer Fahrerassistenzeinheit zusammenwirkt. Bei der Fahrerassistenzeinheit kann es sich beispielsweise um einen Bordcomputer handeln. Die Fahrerassistenzeinheit wirkt mit einem Bremssystem des Fahrzeugs zusammen. Durch eine Fremdeinwirkung von einem Geschoss aus einer Pistole, wird an der Sensoranordnung ein Signal erzeugt bzw. ein Signal unterbrochen. Die Fahrerassistenzeinheit erfasst dieses Signal bzw. die Unterbrechung des Signals und wirkt auf das Bremssystem des Fahrzeugs derart ein, dass das Fahrzeug zum Stillstand gebracht wird.

Ergänzend oder alternativ kann die Fahrerassistenzeinheit auch auf das Antriebsaggregat, beispielsweise den Motor, wirken. Zudem ist es möglich, dass zusätzlich zur Stillsetzung des Fahrzeugs ein akustischer und/oder optischer Alarm über die Hupe oder die Scheinwerfer ausgelöst wird. Gegebenenfalls können die Türen und/oder die Fensterheber zum Festsetzen des Amokfahres verriegelt werden.

Zur Gefahrenabwehr kann es ausreichend sein, das Fahrzeug über das Bremssystem zum Stillstand zu bringen. Ergänzend oder alternativ ist es auch möglich, dass die Stillsetzung dadurch erfolgt, dass der Verbrennungsmotor bzw. Elektromotor außer Betrieb gesetzt wird, sodass das Fahrzeug dann allenfalls nur noch ausrollen kann und in Kombination mit einer Wirkung des Bremssystem unmittelbar zum Stillstand gebracht wird.

Zum Stillsetzen des Fahrzeugs kann die Sensoranordnung auf unterschiedliche Einrichtungen des Fahrzeugs wirken, die für einen Fahrbetrieb benötigt werden. Hier kann es sich beispielsweise um eine Unterbrechung der Stromversorgung oder der Kraftstoffversorgung handeln.

Erfindungsgemäß handelt es sich bei der Sensoranordnung um ein flächiges Gebilde, beispielsweise um eine Platte oder eine Folie, die an unterschiedlichen Stellen des Fahrzeugs integriert ist. Das flächige Gebilde, hat den Vorteil, dass es leicht von einem Geschoss von außen getroffen werden kann. Rollt bei einer Amokfahrt ein Fahrzeug auf eine Menschenmenge zu, so können die Sicherheitskräfte auf die Baueinheit des Fahrzeugs, in der das flächige Gebilde integriert ist, Schüsse abgeben. Beim Auftreffen eines Geschosses, beispielsweise einer Kugel aus einer Pistole, löst die flächige Sensoranordnung ein Signal aus, was zu einer Stillsetzung des Fahrzeugs führt.

Als besonders günstig erweist es sich, wenn die Sensoranordnung in herkömmliche, marktübliche Serienkomponenten integriert ist, beispielsweise durch Eingießen.

Erfindungsgemäß führt ein Auftreffen eines Geschosses zur Unterbrechung eines Signals an der Sensoranordnung. Die Sensoranordnung wird beispielsweise von einem Bordcomputer mehrmals in einem gewissen Zeittakt, beispielsweise 100-mal pro Sekunde, abgefragt. Bei einem Ausfall der Kommunikation ist der Bordcomputer so programmiert, dass er auf das Bremssystem zugreift und das Fahrzeug stilllegt. Er kann auch den Motor ausschalten bzw. ergänzend Licht- oder akustische Signale erzeugen.

Erfindungsgemäß weist das flächige Gebilde mindestens eine Fläche von 2 dm², insbesondere mehr als 3 dm², vorzugsweise mehr als 5 dm² auf.

Erfindungsgemäß ist die Sensoranordnung in einem Scheinwerferelement des Fahrzeugs integriert. Beispielsweise kann ein Scheinwerferelement mit einer Folie oder einer Platte versehen sein, welche die Sensoranordnung aufweist. Dabei kann es sich auch um eine transparente Folie handeln, die beispielsweise in der Abdeckung der Scheinwerferanordnung intergiert ist, sodass der Lichtstrahl durch diese hindurchfallen kann.

Ergänzend oder alternativ kann die als flächiges Gebilde ausgebildete Sensoranordnung in den Reflektoren oder dem Gehäuse einer Scheinwerferanordnung des Fahrzeugs integriert sein.

Bei einer Variante der Erfindung ist die Sensoranordnung als flächiges Gebilde in einem Karosserieteil des Fahrzeugs angeordnet. Dabei erweist es sich als vorteilhaft, wenn die flächige Sensoranordnung in einer Schürze des Fahrzeugs integriert ist. Dabei eignet sich insbesondere die Frontschürze. Die Frontschürze ist jener Teil im vorderen Bereich einer Fahrzeugkarosserie, der sich direkt unterhalb der Motorhaube befindet. Sie ist so groß und stabil, dass sie die Funktion der Stoßabsorption übernimmt. Nur bei älteren Fahrzeugmodellen ist zwischen Motorhaube und Frontschürze noch ein Stoßfänger als separates Bauteil angeordnet. Auch in einem Stoßfänger kann die als flächiges Gebilde ausgebildete Sensoranordnung angeordnet sein. Die Schürzen der Karosserie sind in der Regel aus Kunststoff bzw. Verbundwerkstoffen gefertigt. Beispielsweise kann die Sensoranordnung dort mit eingegossen werden bzw. als Folie beim Fertigungsvorgang mit eingelegt werden.

Erfindungsgemäß weist die Sensoranordnung mindestens eine Leiterbahn auf. Dabei handelt es sich um elektrisch leitende Verbindungen mit einem vorzugsweise zweidimensionalen Verlauf, das heißt in einer Ebene.

Vorzugsweise weist die Sensoranordnung verhältnismäßig eng beieinander liegende elektrische Leiterbahnen auf, die eine Art Maschensystem bzw. ein Netz bilden

Ergänzend oder alternativ können auch optische Leitersysteme als Sensorflächen in der Sensoranordnung integriert sein.

Durchschlägt ein Geschoss die engmaschigen Bahnen des elektrischen oder optischen Leiternetzes, so erzeugt die Sensoranordnung ein Signal bzw. es wird ein Signal unterbrochen. Dies führt zu einer Stillsetzung des Fahrzeuges. Bei einer Variante der Erfindung umfasst die Sensoranordnung einen Detektor für ein Funksignal. Bei dieser Variante der Erfindung kann das Fahrzeug durch ein sogenanntes Funkfeuer von Sicherheitskräften zum Stillstand gebracht werden. Dazu ist der Detektor auf eine ganz bestimmte Frequenz ausgelegt, die nur von entsprechenden Sicherheitskräften durch ein Funksignal ausgelöst werden kann. Das Funksignal ist vorzugsweise kodiert. Es kann sich um eine analoges oder digitales Signal handeln. Erfasst der Detektor der Sensoreinrichtung ein solches spezifisches Funksignal, so wirkt die Sensoranordnung auf eine Einrichtung zum Stillsetzen des Fahrzeugs, vorzugsweise auf das Fahrerassistenzsystem, das dann das Bremssystem des Fahrzeugs aktiviert und somit das Fahrzeug zum Stillstand bringt.

Bei einer Variante der Erfindung weist die Sensoranordnung einen Empfänger für ein GPS-Signal auf. So ist es prinzipiell denkbar, dass das System zur Gefahrenabwehr einer Amokfahrt so programmiert wird, dass ein Stillsetzen des Fahrzeugs automatisch erfolgt, wenn es in vorgegebene Sperrgebiete einfährt, die durch ein "GPS-Feuer" geschützt sind.

Bei einem "GPS-Feuer" kann auch vor dem Stillsetzen ein akustischer oder optischer Alarm ausgelöst werden als Kenntlichmachung eines "Amok-Modus".

Bei dem Fahrzeug kann es sich auch um ein Elektroauto handeln, bei dem das Antriebsaggregat ein Elektromotor ist.

Kommt bei der Erfindung eine Sensoranordnung mit einen Detektor für ein Funksignal zum Einsatz kann das Fahrzeug durch ein sogenanntes Funkfeuer von Sicherheitskräften zum Stillstand gebracht werden.

Das Funkfeuer kann auch als Bedingung zum vereinfachten Festsetzen des Fahrzeuges dienen.

Zum Stillsetzen des Fahrzeugs kann eine Kombination an Signalen definiert werden. Beispielsweise können folgende Kombinationen zum Einsatz kommen:
1.) Durchbrechung des engmaschigen Netzes der Leiterbahnen und/oder Funkfeuer.
2.) der Durchbrechung des engmaschigen Netzes der Leiterbahnen und/oder GPS Signal.
3.) Funkfeuer und/oder GPS Signal.

Die Erfindung erhält besondere Relevanz für autonom fahrende Fahrzeuge, die als einer Art "Drohnen" zum verüben von Anschlägen eingesetzt werden können.

Bei diesen Sperrgebieten kann es sich beispielsweise um dauerhafte Fußgängerbereiche handeln oder um für eine bestimmte Veranstaltung im System hinterlegte Bezirke, die nicht von Fahrzeugen befahren werden dürfen. Erhält der Empfänger der Sensoranordnung ein GPS-Signal, welches den geografischen Daten dieser entweder dauerhaft oder temporär vorgegebenen Sperrgebiete entspricht, so erfolgt eine Stillsetzung des Fahrzeugs.

Als besonders günstig erweist es sich, wenn das System zur Gefahrenabwehr mit anderen Vorrichtungen zusammenwirkt bzw. andere Vorrichtungen umfasst, die ein fehlerhaftes Stillsetzen des Fahrzeuges verhindern. Beispielsweise kann es sich bei diesen Vorrichtungen um einen Beschleunigungssensor handeln.

Dadurch ist das System in der Lage beispielsweise eine Auslösung bzw. Unterbrechung eines Signal aufgrund eines Schusses von Sicherheitskräften beispielsweise von einer Beschädigung der Sensorfläche durch einen Unfall beim Auffahren, zu unterscheiden. Die Kombination der zerstörten Sensorfläche durch einen Unfall in Kombination mit der Auswertung von Signalen eines Beschleunigungssensors führt dazu, dass das System erkennt, dass es sich um einen Unfall handelt und nicht um eine Amokfahrt. Auch die Auswertung von GPS-Signalen bzw. anderen Signalen von Vorrichtungen des Fahrzeugs in Kombination mit der Sensoranordnung des Systems ermöglichen es, fehlerhafte Stillsetzungen des Fahrzeugs, beispielsweise bei einem Auffahrunfall zu verhindern und somit eine Unterscheidung von einer Amokfahrt zu ermöglichen. Dazu dienen spezielle mathematische Rechenmodelle. Dadurch kann auch der Grad der Beschädigung des Fahrzeugs analysiert werden und es können gegebenenfalls Maßnahmen getroffen werden, wie beispielsweise die automatische Einleitung eines Ausweichmanövers.

Weitere Vorteile der Erfindung ergeben sich aus der Beschreibung von Ausführungsbeispielen anhand von Zeichnungen und aus den Zeichnungen selbst.

Dabei zeigt:
- Figur 1: eine Frontansicht eines Fahrzeugs,
- Figur 2: eine Seitenansicht eines Fahrzeugs,
- Figur 3: eine Heckansicht eines Fahrzeugs,
- Figur 4: eine Scheinwerferanordnung eines Fahrzeugs,
- Figur 5: eine schematische Darstellung eines Systems zur Gefahrenabwehr mit einer Sensoranordnung, die in eine Scheinwerferanordnung integriert ist,
- Figur 6: ein System zur Gefahrenabwehr mit einer Sensoranordnung, die in eine Frontschürze eines Fahrzeugs integriert ist.

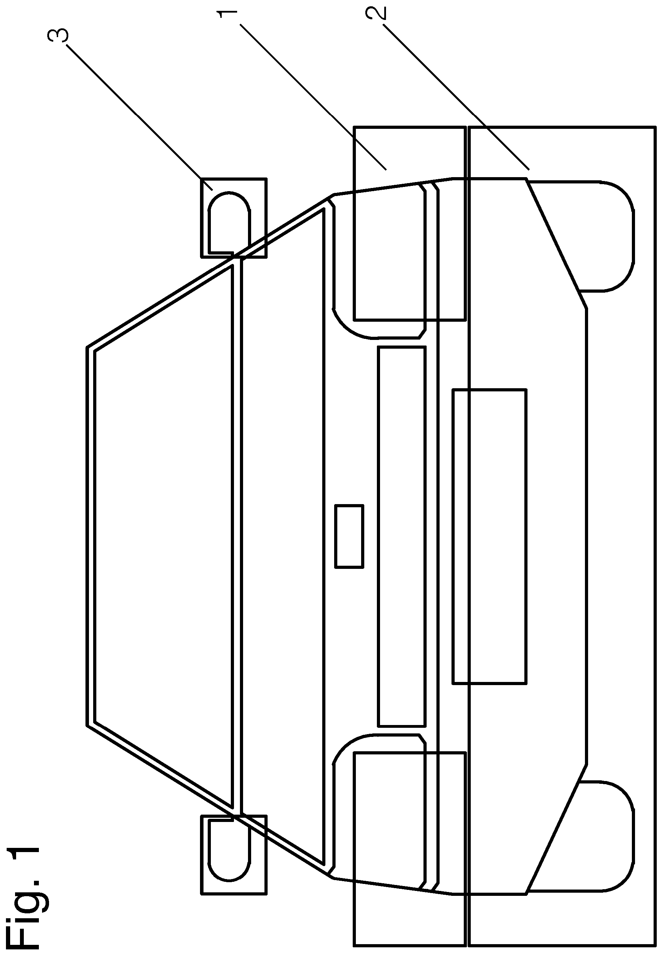

Figur 1 zeigt eine schematische Frontansicht eines Fahrzeugs mit Bereichen, in denen eine flächige Sensoranordnung integriert sein kann. Beispielsweise eignet sich dazu eine Scheinwerferanordnung 1 des Fahrzeugs. Ergänzend oder alternativ kann eine flächige Sensoranordnung auch in einem Karosserieteil 2 des Fahrzeugs angeordnet sein. Im Ausführungsbeispiel handelt es sich bei dem Karosserieteil 2 um die Frontschürze des Fahrzeugs. Ergänzend oder alternativ kann die als flächiges Gebilde ausgeführte Sensoranordnung auch in den Außenspiegeln 3 eines Fahrzeugs integriert sein.

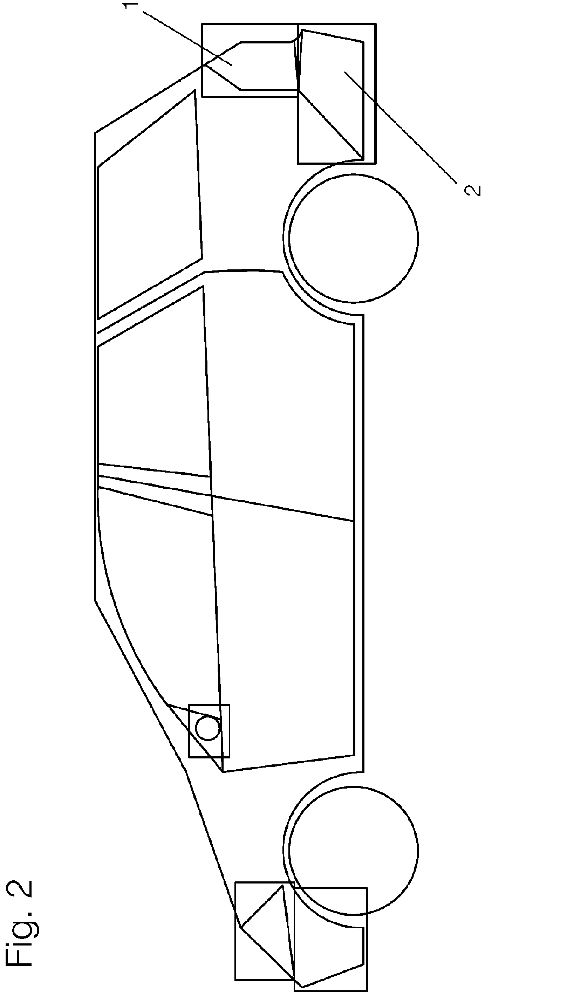

Figur 2 zeigt eine Seitenansicht des Fahrzeugs. Zusätzlich zu den in Figur 1 erwähnten Teilen des Fahrzeugs kann eine als flächiges Gebilde ausgebildete Sensoranordnung ergänzend oder alternativ in der Heckbeleuchtung zusätzlich zur Frontbeleuchtung angeordnet sein.

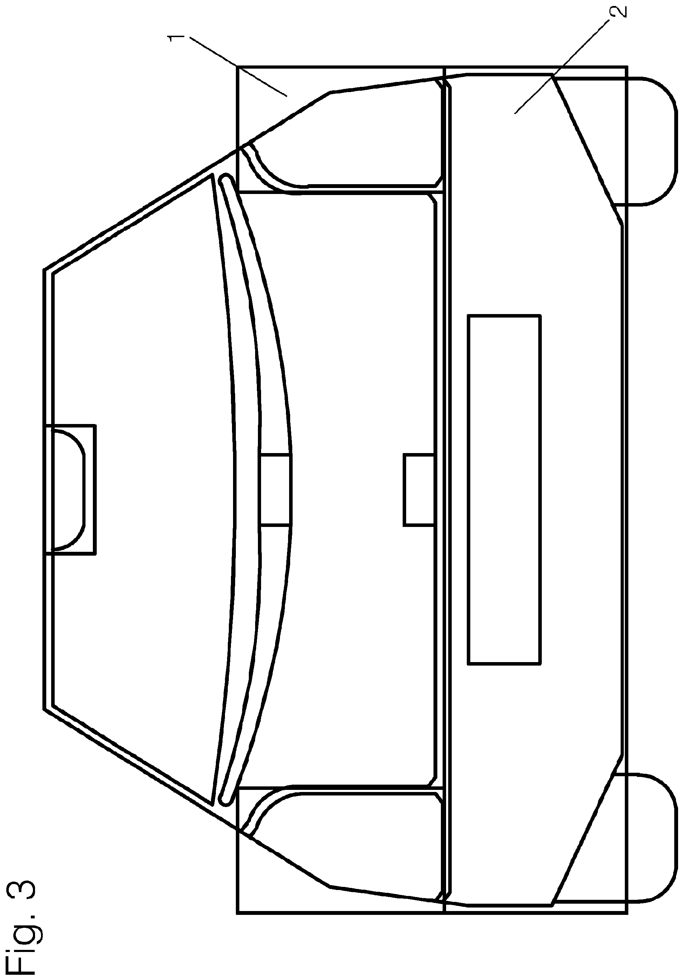

Figur 3 zeigt eine Ansicht eines Fahrzeugs von hinten mit einer Integration einer flächigen Sensoranordnung in den Heckscheinwerfern 1 und dem als Heckschürze ausgebildeten Karosserieteil 3.

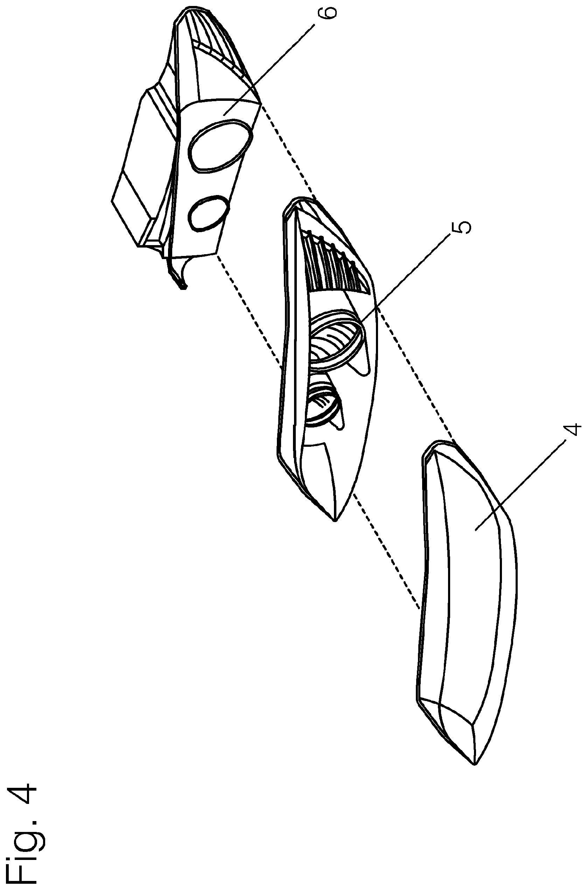

Figur 4 zeigt eine perspektivische Explosionsdarstellung einer Beleuchtungsanordnung eines Fahrzeugs.

Die als flächiges Gebilde ausgeführte Sensoranordnung kann in der transparenten Abdeckung 4 und/oder im Reflektorteil 5 und/oder im Gehäuseteil 6 angeordnet sein.

Die flächige Sensoranordnung kann beispielsweise in der transparenten Abdeckung als durchsichtige Folie integriert sein. Auch können elektrische und/oder Leiter in die transparente Abdeckung 4 beim Herstellungsprozess eingegossen werden.

Auch das Reflektorteil 5 kann mit einer flächigen Sensorfläche versehen werden. Bei dem Reflektorteil 5 sind neben den Beleuchtungsmitteln auch entsprechende Kunststoffteile vorhanden, in welche die flächige Sensoranordnung integriert werden kann. Ergänzend oder alternativ kann die flächige Sensoranordnung auch in das Reflektorteil 5 eingebaut werden, beispielsweise als Platte, Folie oder als Kunststoffteil, wobei vorzugsweise die flächigen Teile Leiterbahnen in Form von elektrischen Leitern haben oder optischen Leitern aufweisen, welche das flächige Gebilde maschen- und/oder netzartig durchziehen.

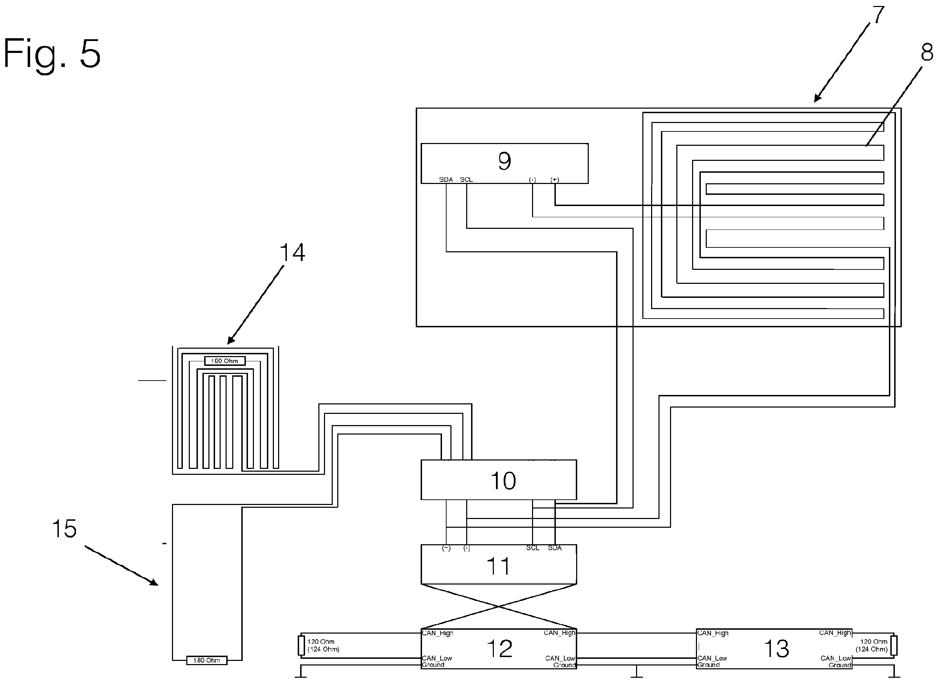

Figur 5 zeigt schematisch den Aufbau eines Systems zur Gefahrenabwehr einer Amokfahrt eines Fahrzeugs. Die Darstellung gemäß Figur 5 weist eine flächige Sensoranordnung 7 auf, welche in einem Gehäuseteil eines Scheinwerfers integriert ist. Die flächige Sensoranordnung 7 umfasst Leiterbahnen 8, welche das Gehäuseteil engmaschig durchziehen. Bei den Leiterbahnen 8 kann es sich beispielsweise um ein enges Geflecht aus Litzen oder sonstigen elektrischen Leitern handeln. Die Leiterbahnen 8 sind mit einem Bauteil 9 verbunden. Bei dem Bauteil 9 kann es sich beispielsweise um einen Accelerometer handeln. Das Bauteil 9 steht im Ausführungsbeispiel gemäß der Darstellung in Figur 5 mit einem Analog-Digital-Wandler 10 in Verbindung. Der Analog-Digital-Wandler übermittelt Signale an einen Mikrocontroller 11, der wiederum mit einem CAN-Buscontroller (CBS) in Verbindung steht. Dieser wiederum ist an einem Bordcomputer 13 angeschlossen, bei dem es sich um einen CAN-Teilnehmer handelt (Controller Area Network). Ein CAN-Bus (Controller Area Network) ist ein serielles Bussystem und gehört zu den Feldbussen. Somit erfolgt die Signalübertragung von dem Bauteil 9 zu dem Analog-Digital-Konverter (ADC) 10 über den Mikrocontroller 11 an den CAN-Bus-Controller (CBS) 12 und dann an den Bordcomputer 13, der als Fahrerassistenzsystem wirkt. Der Mikrocontroller 11 dient der Anbindung des CAN-Buses.

Weiterhin zeigt Figur 5 eine flächige Sensoranordnung 14, die in einem Reflektorteil 5 einer Scheinwerferanordnung integriert ist. Auch diese flächige Sensoranordnung 14 verfügt über ein Geflecht und/oder Netz und/oder maschige Ausbildung von Leiterbahnen 8, die beispielsweise auch als Messschleifen ausgebildet sein können. Beispielsweise kann es sich dabei um einen elektrischen Widerstand handeln. Auch diese als flächiges Gebilde ausgebildete Sensoranordnung 14 steht mit einem Analog-Digital-Konverter 10, einem Mikrocontroller 11, einem CAN-Bus-Controller 12 und einem Bordcomputer 13 in Verbindung. Der Bordcomputer 13 kann als Fahrerassistenzsystem dienen und auf unterschiedliche Systeme im Fahrzeug zugreifen, beispielsweise das Bremssystem oder die Motorsteuerung oder eine sonstige Einrichtung, die zu einem Stillsetzen des Fahrzeugs führt.

Weiterhin zeigt Figur 5 eine Sensoranordnung 15, die in der transparenten Gehäuseabdeckung eines Scheinwerfers integriert ist. Auch hier handelt es sich um eine Leiterbahn, beispielsweise einen elektrischen Widerstand, der über Analog-Digital-Konverter 10, Mikrocontroller 11, CAN-Bus-Controller 12 mit dem Bordcomputer 13 verbunden ist.

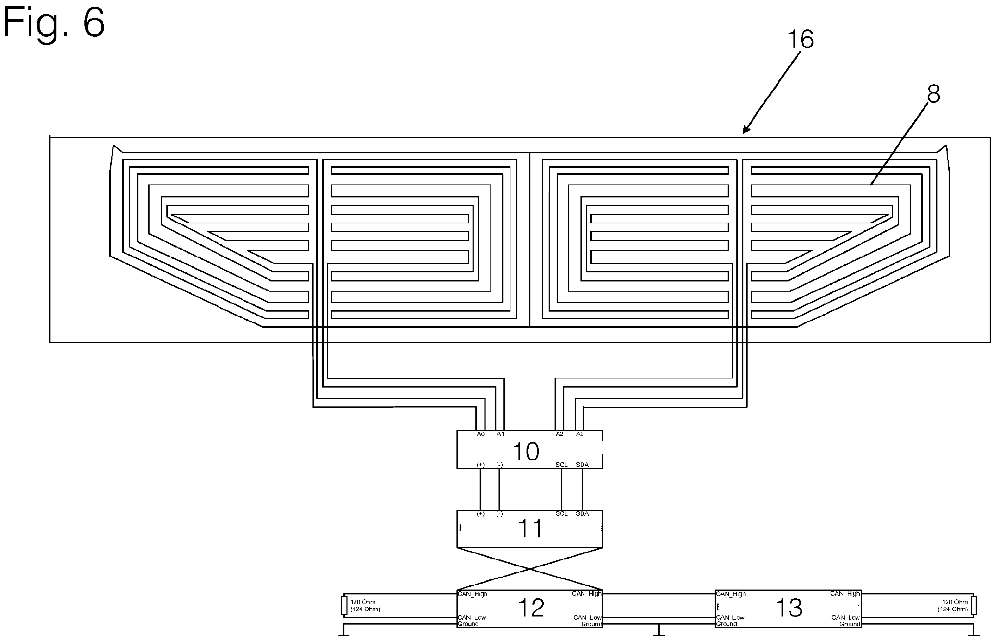

Figur 6 zeigt eine flächige Sensoranordnung 16, die in einem Karosserieteil des Fahrzeugs integriert ist. Beispielsweise handelt es sich dabei um die Frontund/oder Heckschürze eines Fahrzeugs. Dieses Karosserieteil wird von einem engmaschigen Netz an Leiterbahnen 8 durchzogen. Trifft ein Körper, beispielsweise ein Geschoss oder ein Stein, auf diese flächige Sensoranordnung, so löst die aufgrund der Durchbrechung des engmaschigen Netzes der Leiterbahnen ein Signal aus, das vom Bordcomputer 13 erfasst wird. Der Bordcomputer 13 löst dann das Bremssystem aus und bringt das Fahrzeug zum Stehen bzw. schaltet den Antrieb des Fahrzeugs aus. Die Sensorfläche, die in den Ausführungsbeispielen beispielsweise in den Scheinwerfergehäusen vorne und/oder hinten verbaut sind, werden mit einem engmaschigen Geflecht aus Leiterbahnen 8 durchzogen, die beispielsweise auch als Litzen ausgeführt sein können, ähnlich wie bei einer Einbruchtapete.

Die Leiterbahnen 8 können beispielsweise einen Sensor wie etwa einen Temperatursensor und/oder einen Beschleunigungssensor, auch Accelerometer, mit Spannung versorgen bzw. die Datenkommunikation aufrechterhalten. Beim Auslesen bzw. Ansprechen auf einer bestimmten systembekannten Adresse bzw. einer im System hinterlegten Adresse antwortet diese Sensoranordnung mit einer einmaligen Seriennummer bzw. einen aktuellen Wert. Beim Ausfall der Kommunikation mit dem Sensor kann die vorkonfigurierte Hard- bzw. Software darauf reagieren. Auch in Kombination mit weiteren Messschleifen, anderen Ebenen und zeitlichen Abfolgen ist dies möglich.

## Patentansprüche

1. Fahrzeug mit einem System zur Gefahrenabwehr einer Amokfahrt eines Fahrzeugs, wobei das System mindestens eine Einrichtung zum Stillsetzen des Fahrzeugs durch Fremdeinwirkung von außen aufweist, wobei das System eine Sensoranordnung (7, 14, 15, 16) umfasst, die mit der Einrichtung in Verbindung steht, **dadurch gekennzeichnet, dass** die Sensoranordnung (7, 14, 15, 16) als flächiges Gebilde ausgebildet ist, wobei das flächige Gebilde in einer Beleuchtungsanordnung (1) des Fahrzeugs, insbesondere in einer Scheinwerferanordnung integriert ist und/oder das flächige Gebilde in einem Karosserieteil (2) integriert ist, wobei das flächige Gebilde mindestens eine Fläche von 2 dm² aufweist, wobei die Sensoranordnung (7, 14, 15, 16) engmaschige elektrische und/oder optische Leiterbahnen (8) aufweist und bei einem Durchschlagen der Bahnen durch ein Geschoss in der Art einer Kugel aus einer Pistole, die Sensoranordnung (7, 14, 15, 16) ein Signal auslöst und/oder ein Signal unterbricht, um das Fahrzeug zum Stillstand zu bringen, wobei die Sensoranordnung (7, 14, 15, 16) mit einer Fahrerassistenzeinheit (13) zusammenwirkt, wobei die Fahrerassistenzeinheit (13) zum Stillsetzen des Fahrzeugs auf ein Bremssystem und/oder ein Antriebssystem des Fahrzeugs wirkt.

2. Fahrzeug nach Anspruch 1, **dadurch gekennzeichnet, dass** die Sensoranordnung mindestens eine elektrische und/oder optische Leiterbahn (8) in Form einer geschlängelten Anordnung und/oder eines Netzes aufweist.

3. Fahrzeug nach Anspruch 1 oder 2, **dadurch gekennzeichnet, dass** die Sensoranordnung (7, 14, 15, 16) einen Detektor für ein Funksignal aufweist.

4. Fahrzeug nach einem der Ansprüche 1 bis 3, **dadurch gekennzeichnet, dass** die Sensoranordnung (7, 14, 15, 16) einen Empfänger für ein GPS-Signal aufweist.

5. Fahrzeug nach einem der Ansprüche 1 bis 4, **dadurch gekennzeichnet, dass** das System mit anderen Bauteilen zur Verhinderung eines fehlerhaften Stillsetzen des Fahrzeugs zusammenwirkt.

6. Verfahren zum Stillsetzen eines Fahrzeugs nach einem der Ansprüche 1 bis 5, mit folgenden Schritten:
- Fremdeinwirken auf eine Sensoranordnung (7, 14, 15, 16) von außen,
- Abgabe und/oder Unterbrechung eines Signals von der Sensoranordnung (7, 14, 15, 16) auf die Einrichtung,
- Stillsetzen des Fahrzeugs durch die Einrichtung.

## Claims

1. Vehicle with a system for averting the danger of a vehicle driving amok, wherein the system has at least one device for immobilising the vehicle by external influence, wherein the system comprises a sensor arrangement (7, 14, 15, 16) which is connected to the device, **characterised in that** the sensor arrangement (7, 14, 15, 16) is designed as a flat structure, the flat structure being integrated in a lighting arrangement (1) of the vehicle, in particular in a headlight arrangement, and/or the flat structure being integrated in a body part (2), wherein the flat structure has an area of at least 2 dm², wherein the sensor arrangement (7, 14, 15, 16) has closely spaced electrical and/or optical conductor tracks (8) and, when the tracks are penetrated by a projectile such as a bullet from a pistol, the sensor arrangement (7, 14, 15, 16) triggers a signal and/or interrupts a signal in order to bring the vehicle to a standstill, wherein the sensor arrangement (7, 14, 15, 16) interacts with a driver assistance unit (13), wherein the driver assistance unit (13) acts on a braking system and/or a drive system of the vehicle in order to bring the vehicle to a standstill.

2. Vehicle according to claim 1, **characterised in that** the sensor arrangement has at least one electrical and/or optical conductor track (8) in the form of a meandering arrangement and/or a network.

3. Vehicle according to claim 1 or 2, **characterised in that** the sensor arrangement (7, 14, 15, 16) has a detector for a radio signal.

4. Vehicle according to one of claims 1 to 3, **characterised in that** the sensor arrangement (7, 14, 15, 16) has a receiver for a GPS signal.

5. Vehicle according to one of the claims 1 to 4, **characterised in that** the system interacts with other components to prevent the vehicle from coming to an erroneous standstill.

6. Method for immobilising a vehicle according to one of the claims 1 to 5 comprising the following steps:
- External influence on a sensor arrangement (7, 14, 15, 16) from outside,
- Delivery and/or interruption of a signal from the sensor arrangement (7, 14, 15, 16) to the device,
- Immobilisation of the vehicle by the device.

## Revendications

1. Véhicule doté d'un système permettant d'éviter le danger des conduites folles d'un véhicule, dans lequel le système comporte au moins un dispositif permettant d'immobiliser le véhicule sous l'effet d'une influence extérieure, dans lequel le système comporte un dispositif de capteurs (7, 14, 15, 16) qui est relié au dispositif, **caractérisé en ce que** le dispositif de capteurs (7, 14, 15, 16) est conçu comme une structure plate, la structure plate étant intégrée dans un dispositif d'éclairage (1) du véhicule, en particulier dans un dispositif de phares, et/ou la structure plate étant intégrée dans une partie de la carrosserie (2), la structure plate ayant une surface d'au moins 2 dm², dans lequel le dispositif de capteurs (7, 14, 15, 16) comporte des pistes de conducteurs électriques et/ou optiques (8) étroitement espacées et, lorsque les pistes sont pénétrées par un projectile tel qu'une balle de pistolet, le dispositif de détection (7, 14, 15, 16) déclenche un signal et/ou interrompt un signal afin d'immobiliser le véhicule, le dispositif de capteurs (7, 14, 15, 16) interagit avec une unité d'aide à la conduite (13), l'unité d'aide à la conduite (13) agissant sur un système de freinage et/ou un système de propulsion du véhicule afin d'immobiliser le véhicule.

2. Véhicule selon la revendication 1, **caractérisé par le fait que** l'ensemble de capteurs comporte au moins une piste conductrice électrique et/ou optique (8) sous la forme d'un méandre et/ou d'un réseau.

3. Véhicule selon la revendication 1 ou 2, **caractérisé par le fait que** l'ensemble de capteurs (7, 14, 15, 16) comporte un détecteur de signal radio.

4. Véhicule selon l'une des revendications 1 à 3, **caractérisé par le fait que** l'ensemble de capteurs (7, 14, 15, 16) est doté d'un récepteur pour un signal GPS.

5. Véhicule selon l'une des revendications 1 à 4, **caractérisé par le fait que** le système interagit avec d'autres composants pour empêcher le véhicule de s'immobiliser de manière erronée.

6. Procédé d'immobilisation d'un véhicule selon l'une des revendications 1 à 5 comprenant les étapes suivantes :
- Influence externe sur un ensemble de capteurs (7, 14, 15, 16) provenant de l'extérieur,
- Délivrance et/ou interruption d'un signal de l'ensemble de capteurs (7, 14, 15, 16) à l'appareil,
- Immobilisation du véhicule par le dispositif.
